# EUROPEAN PATENT APPLICATION

(11) **EP 4 520 193 A1**
(43) Date of publication of application: **12.03.2025**
(21) Application number: 24198373.3
(22) Date of filing: 04.09.2024
(51) Int. Cl.: A24C 5/35, B65G 15/14, B65G 15/42

(54) **CONVEYOR ASSEMBLY AND METHOD FOR CONVEYING ARTICLES**

(30) Priority: 06.09.2023 IT 202300018324
(71) Applicant: G.D S.p.A., 40133 Bologna (IT)
(72) Inventor: FERRARI, Michele, 40133 BOLOGNA (IT); CALZOLARI, Luca, 40133 BOLOGNA (IT); SASSI, Marco, 40133 BOLOGNA (IT)
(74) Representative: Studio Torta S.p.A.

(57) **Abstract**

Conveyor assembly (3) for cylindrical articles (2) of the tobacco processing industry; the conveyor assembly (3) is configured to convey the articles (2) along an intermediate segment (IS') with a variable length of a path (P) from an input (9) to an output (10) and comprises a first transporting element (11) and a second transporting element (16), which are arranged opposite one another at a distance of less than 70 mm and are configured to accompany the articles (2) in a given upward direction (D).

## Description

### CROSS-REFERENCE TO RELATED APPLICATIONS

This patent application claims priority from Italian patent application no. 102023000018324 filed on September 6, 2023, the entire disclosure of which is herein incorporated by reference.

### TECHNICAL FIELD

The invention relates to a conveyor assembly and to a method of conveying articles.

### BACKGROUND OF THE INVENTION

Variable-capacity stores for cigarettes of the type described in patent EP581143 are known in the tobacco processing industry. These stores comprise a variable-length storage path having two conveying portions wound around one another on a common axis with turns having the same inclination; and a deflection device, which is configured to move the cigarettes from one portion to the other and is movable along both portions so as to change the overall length of the storage path.

EP838165 discloses a variable-capacity store comprising two helical conveyors arranged one above the other and connected by an intermediate element configured to transfer the products from the upper conveyor to the lower conveyor only by force of gravity. The two conveyors operate pneumatically.

This type of stores is affected by several drawbacks, among which the following ones are worth being mentioned.

The particular arrangement of the two conveying portions arranged one within the other not only makes the structure and construction of the stores particularly complex and expensive, but also significantly complicates maintenance operations.

In addition, the stores are not very ductile as it is not possible to provide input and output stations for the cylindrical articles arranged in desired positions (for example, one at the bottom and one at the top). More in particular, according to EP581143 and EP838165, the output of the articles is located at the bottom, a position that is not particularly convenient for the layouts of current machines (such as, for example, cigarette packer machines or combiners for combining filters and tobacco rods together) that can be found downstream of the stores.

Furthermore, pneumatic conveyors (like, for example, the ones disclosed in EP838165) are not very delicate with articles (in particular, cigarettes). As a matter of fact, this type of conveyors can not only damage the articles with relative ease, but can also lead to the detachment and dispersion of particles (for example, tobacco) from the articles themselves.

In addition, conveying relatively delicate items (such as cigarettes) exclusively by gravity can lead to damage to the articles and/or to the creation of clogs.

WO2019073447A1 discloses a variable-capacity store for articles of the tobacco processing industry, comprising a conveyor assembly comprising a first conveyor having a substantially helical shape; a second conveyor with a substantially helical shape and arranged above the first conveyor; a linear transfer conveyor, designed to convey the articles upwards from the first conveyor to the second conveyor, having a variable length. This type of store suffers from some defects, among which there is the fact that clogging may occur due, for example, to the wrong orientation of some articles (in particular, in the area of the transfer conveyor that moves the articles upwards). This can lead to a standstill of the production even for a relatively long time (the greater the clogging, the longer it will take to solve it) and/or to a damaging of the articles.

The object of the invention is to provide a conveyor assembly and a method of conveying articles, which are designed to at least partially overcome the drawbacks of the prior art and, at the same time, are inexpensive and easy to be manufactured/implemented.

### SUMMARY

In accordance with the invention, there are provided a conveyor assembly and a method of conveying articles as claimed in the accompanying independent claims and, preferably, in any one of the claims that directly or indirectly depend on the aforesaid independent claims.

### BRIEF DESCRIPTION OF THE DRAWINGS

The invention will now be described with reference to the accompanying drawings showing a non-limiting embodiment thereof, wherein:
- figures 1 to 5 are perspective views of successive operating configurations of a store comprising a conveyor assembly according to the invention;
- figure 6 is a side view of a component of the conveyor assembly of figures 1-5;
- figure 7 is a cross section of a detail of the conveyor assembly of figures 1-5;
- figure 8 is a perspective view of the conveyor assembly of figures 1-5 with some details left out for greater clarity;

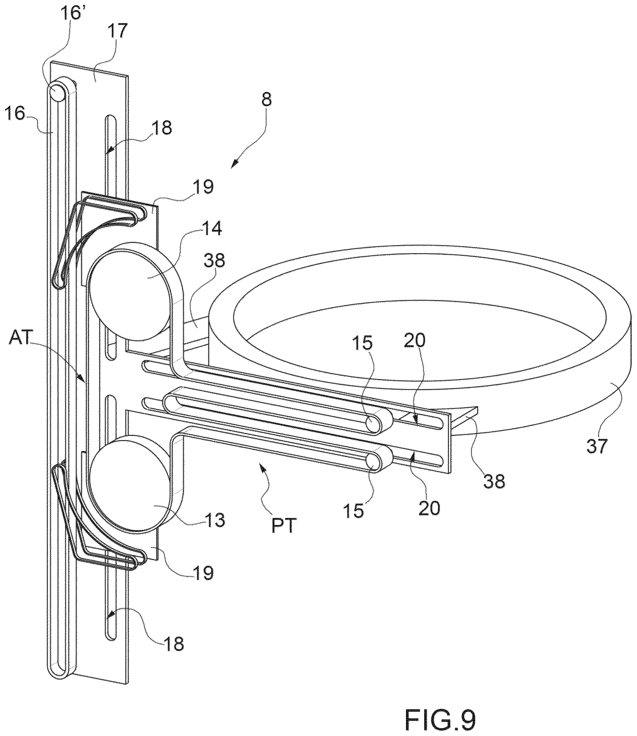

- figure 9 is a perspective view of the component of figure 6 connected to a further element;
- figure 10 is a perspective view of components of the conveyor assembly of figures 1-5;
- figure 11 is a perspective view of a detail of the conveyor assembly of figures 1-5;
- figure 12 is a perspective view from the bottom of a detail of figure 11; and
- figures 13 to 16 are front views, with details removed for greater clarity and on a larger scale, of different embodiments of a part of the conveyor assembly of figures 1-5.

### DETAILED DESCRIPTION

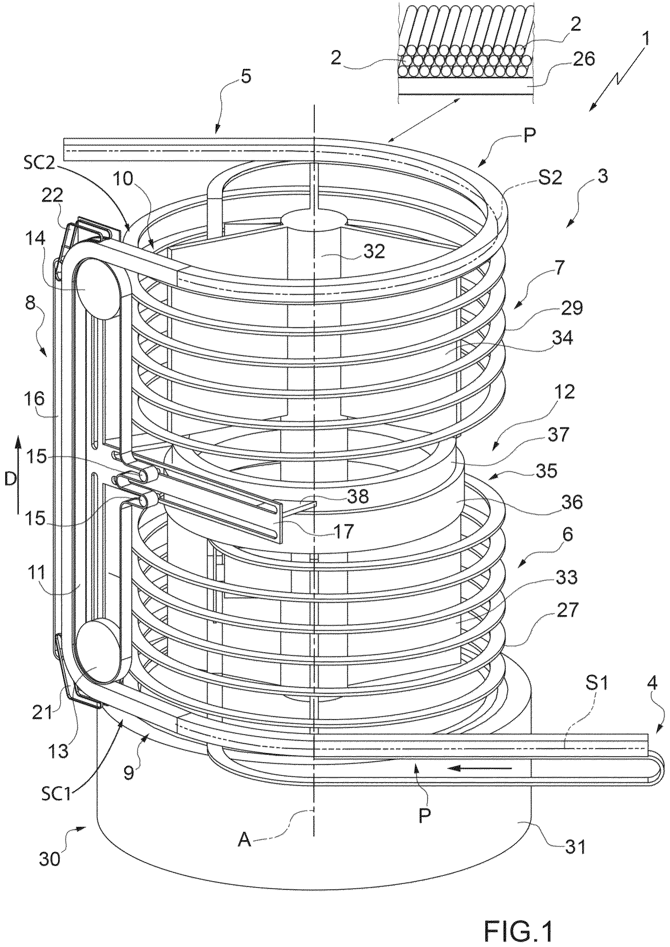

In the accompanying figures (see, in particular, figure 1), number 1 indicates, as a whole, a variable-capacity store for articles 2. The store 1 comprises a conveyor assembly 3 for conveying the articles 2 (in particular, in a mass) from an input station 4 to an output station 5 along a path P (in particular, with a variable length).

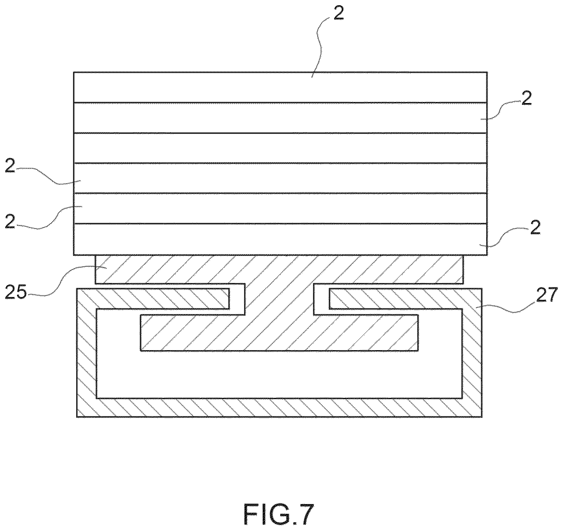

In particular, the articles 2 have an oblong shape. More in particular, the conveyor assembly 3 is designed to convey the articles 2 in a mass (namely, in contact with one another and in several layers - see for example the enlargement of the upper part of figure 1 and figure 7) and, more in particular, crosswise (namely, in a direction that is transverse, in particular perpendicular, to their longitudinal extension).

In particular, the articles 2 are substantially cylindrical articles, more in particular of the tobacco processing industry. For example, the articles 2 are cigarettes, cigarette filters, cigarette filter components (rods), tobacco rods, cartridges and/or components for electronic cigarettes. According to some specific and non-limiting embodiments, the articles 2 are cigarettes.

Advantageously, though not necessarily, the articles 2 have a length of less than about 70 mm (in particular, up to about 65 mm). In particular, the length of the articles 2 is at least about 40 mm (in particular, at least about 45 mm).

In addition or alternatively, the articles 2 have a width (in particular, a diameter) of less than about 15 mm (in particular, up to about 13 mm). In particular, the articles 2 have a width (in particular, a diameter) of at least about 1 mm (in particular, of at least about 3 mm).

The conveyor assembly 3 comprises at least a transfer conveyor assembly 8, which is configured to convey the articles 2 along at least a transfer segment IS of the path P from an input 9 to an output 10; the transfer segment IS has at least an intermediate segment IS' (with a variable length) partially extending upwards. The transfer conveyor assembly 8 is configured to convey the articles 2 along the intermediate segment IS' in a given upward direction D.

The transfer conveyor assembly 8 comprises at least a first transporting element 11 (in particular, a belt and/or a chain), which is configured to (at least partially) accompany the articles 2 along at least part of the intermediate segment IS' in the given upward direction D and has a front face 11' configured to come into contact with at least part of the articles 2; and a second transporting element 16 (in particular, a belt and/or a chain), which is configured to (at least partially) accompany the articles 2 along at least part of the intermediate segment IS' in the given upward direction D and has a front face 16" facing the front face 11' and configured to come into contact with at least part of the articles 2.

The front face 11' and the front face 16" have a distance of less than about 70 mm (in particular, less than about 65 mm; more in particular, less than about 60 mm). In other words, the front face 11' and the front face 16" are less than about 70 mm (in particular, less than about 65 mm; more in particular, less than about 60 mm) apart.

Tests have shown that, in this way, it is surprisingly possible to obtain a reduction in clogging events.

According to some non-limiting embodiments, the front face 11' and the front face 16" have a distance of more than about 40 mm, in particular more than about 45 mm. In other words, the front face 11' and the front face 16" are at least about 40 mm, in particular at least about 45 mm apart.

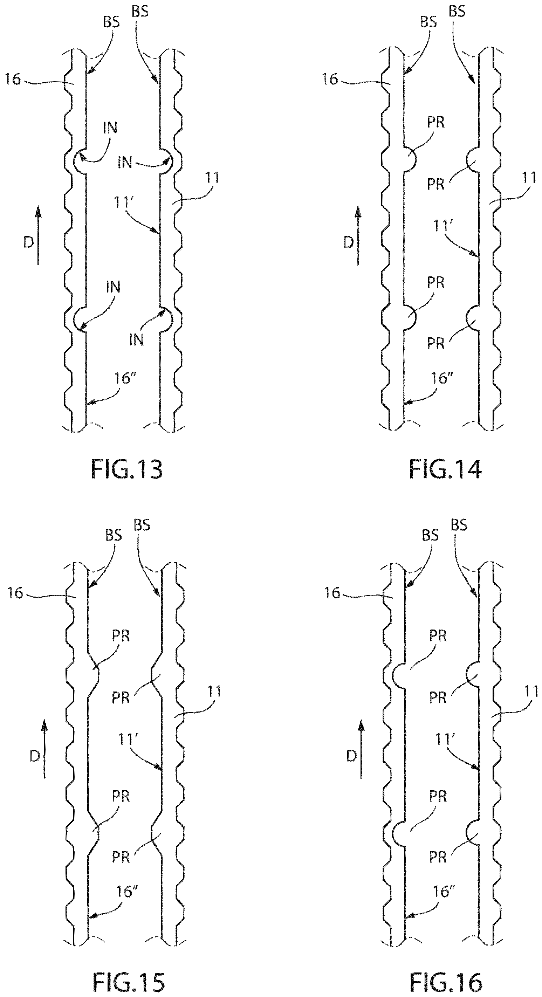

With particular reference to figures 13-16, advantageously but not necessarily, the front face 11' has a plurality of protuberances PR and/or a plurality of indents IN; each protuberance PR has a height (namely, an extension from a base surface BS of the front face 11' - measured perpendicularly to said base surface BS; in particular, measured perpendicularly to the given direction D) of at least about 1.5 mm (in particular, at least about 2 mm); each indent IN has a depth (relative to the base surface BS of the front face 11' - measured perpendicularly to said base surface BS; in particular, measured perpendicularly to the given direction D) of at least about 1.5 mm (in particular, at least about 2 mm).

Tests have shown that, also in this way, it is surprisingly possible to obtain a reduction in clogging events.

In addition or alternatively, the front face 16" also has a plurality of protuberances PR and/or a plurality of indents IN.

According to some non-limiting embodiments, each protuberance PR has a width (hence, measured parallel to the base surface BS; in particular, measured parallel to the given direction D) of at least about 2 mm. In addition or alternatively, each indent IN has a width (hence, measured parallel to the base surface BS; in particular, measured parallel to the given direction D) of at least about 2 mm. In particular, each protuberance PR has a width up to about 1.5 cm and each indent IN has a width up to about 1.5 cm.

According to some non-limiting embodiments, each protuberance PR has a height up to about 2.5 cm; each indent IN has a depth up to about 2.5 cm.

Advantageously, though not necessarily, the protuberances PR are arranged in succession along the first transporting element 11 (in particular, a belt and/or a chain), substantially in the given direction D with a distance (between one protuberance PR and the following one) of less than about 15 cm (in particular, less than 7 cm). In addition or alternatively, the protuberances PR are arranged in succession along the first transporting element 11 (in particular, a belt and/or a chain), substantially in the given direction D with a distance (between one protuberance PR and the following one) of at least 1 cm (in particular, at least 3 cm).

Advantageously, though not necessarily, the conveyor assembly 3 comprises a moving assembly 12, which is configured to move said input 9 and/or said output 10 so as to change a length of the intermediate segment IS' .

According to some non-limiting embodiments, the conveyor assembly 3 comprises a conveyor 6 for conveying the articles 2 from the input station 4 along a segment S1 of the path P. The transfer conveyor assembly 8 is configured to convey the articles 2 from the conveyor 6 along the transfer segment IS (in particular, with substantially linear portions) of the path P and has the input 9, arranged in the area of the segment S1 to receive the articles 2 from the conveyor 6.

Advantageously, though not necessarily, the conveyor assembly 3 also comprises a conveyor 7 for conveying the articles 2 to the output station 5 along a segment S2 of the path P. In these cases, the transfer conveyor assembly 8 is configured to convey the articles 2 from the conveyor 6 to the conveyor 7 along the transfer segment IS (in particular, with substantially linear portions) of the path P and has the input 10, arranged in the area of the segment S2 to feed the articles to the conveyor 7.

In particular, the conveyors 6 and 7 (and, in some cases, also the transfer conveyor assembly 8) are endless conveyors.

According to some non-limiting embodiments, the transfer conveyor assembly 8 is arranged between the conveyors 6 and 7.

Advantageously, though not necessarily, the transfer conveyor assembly 8 is arranged on the side of the conveyors 6 and 7.

Advantageously, though not necessarily, the transfer conveyor assembly 8 is configured to convey the articles 2 upwards.

In particular, the segment S1 (which, in particular, has a substantially helical shape) extends from the input station 4 to the input 9. The segment S2 (which, in particular, has a substantially helical shape) extends from the output 10 to the output station 5.

According to some non-limiting embodiments, the moving assembly 12 is configured to move the transfer conveyor assembly 8 so as to move the input 9 and the output 10 along the conveyor 6 and the conveyor 7, respectively. In particular, the moving assembly 12 also is (consequently) configured to change the length (of the transfer segment IS and) of the segments S1 and S2.

By lengthening the segments S1 and S2, the length of the path P (and, hence, the capacity of the store 1) increases; by shortening the segments S1 and S2, the length of the path P (and, hence, the capacity of the store 1) decreases.

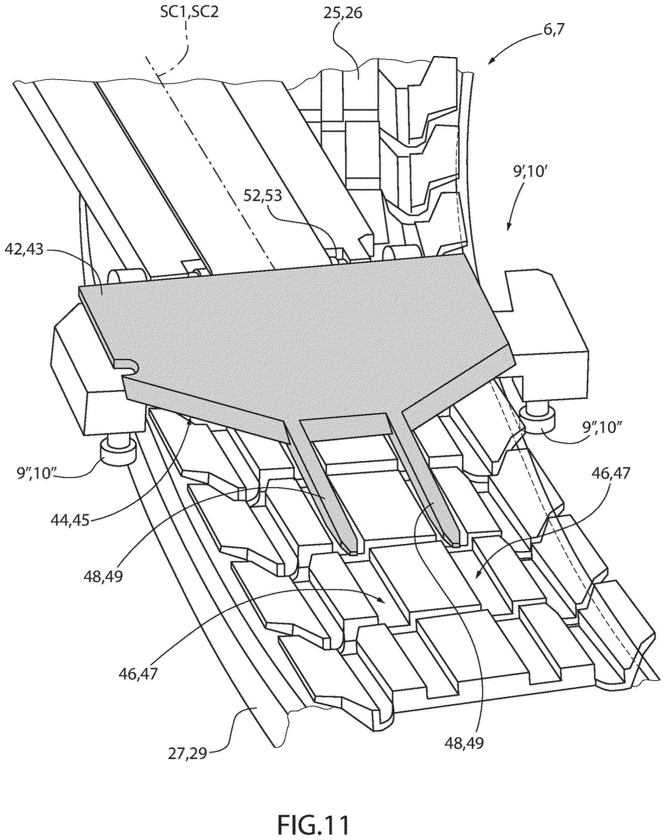

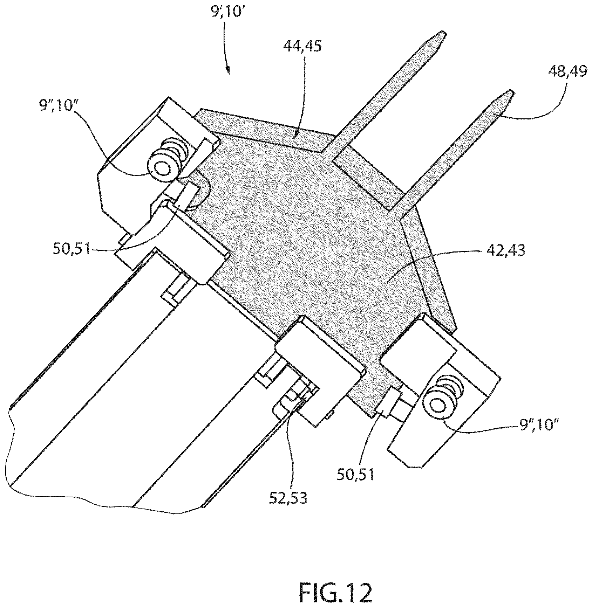

According to some non-limiting embodiments (e.g. as shown in figures 11 and 12), the conveyor assembly 3 comprises a joining device 9', which is configured to allow the articles 2 to shift from the conveyor 6 to the transfer conveyor assembly 8 and is movable on the conveyor 6. In some cases, the conveyor assembly 3 also comprises a joining device 10', which is configured to allow the articles 2 to shift from the transfer conveyor assembly 8 to the conveyor 7 and is movable on the conveyor 7.

In particular, the joining device 9' comprises at least two centring elements 9", which are arranged on opposite sides of the conveyor 6 to reduce the lateral movement of the joining device 9' relative to the conveyor 6.

In particular, the joining device 10' comprises at least two centring elements 10", which are arranged on opposite sides of the conveyor 7 to reduce the lateral movement of the joining device 10' relative to the conveyor 7.

Each centring element 9" comprises at least a first roller (in particular, at least a roller bearing) and/or each centring element 10" comprises at least a second roller (in particular, at least a roller bearing).

Tests have shown that, in this way, it is possible to obtain more stable and reliable connections of the transfer conveyor assembly 8 to the conveyors 6 and/or 7 (a more precise relative position) and a reduction in clogging events.

Advantageously, though not necessarily, the conveying assembly 3 comprises both the joining device 9' and the joining device 10'.

According to some preferred, though non-limiting embodiments, the joining devices 9' and 10' are substantially identical. To this regard, it should be pointed out that figures 11 and 12 show both the joining device 9' and the joining device 10'.

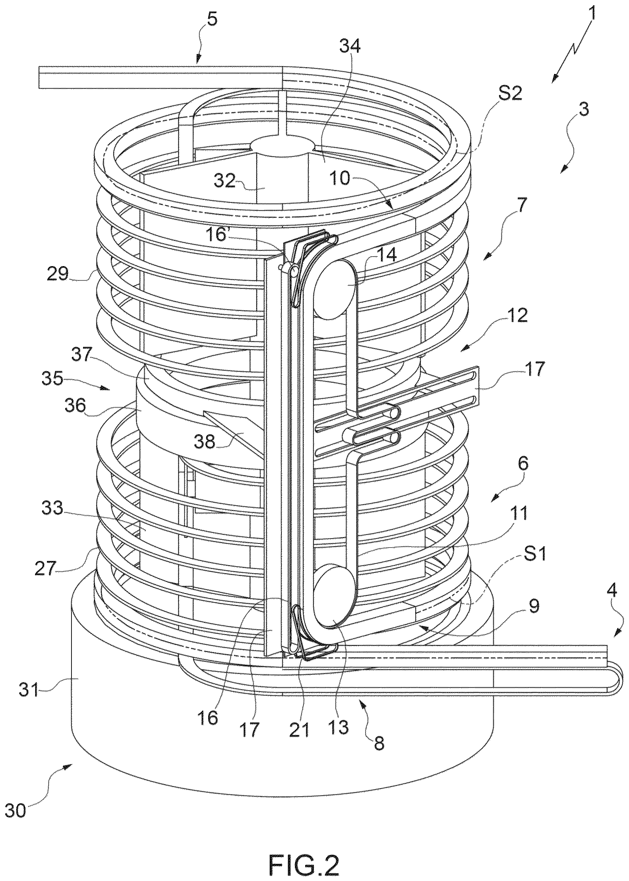

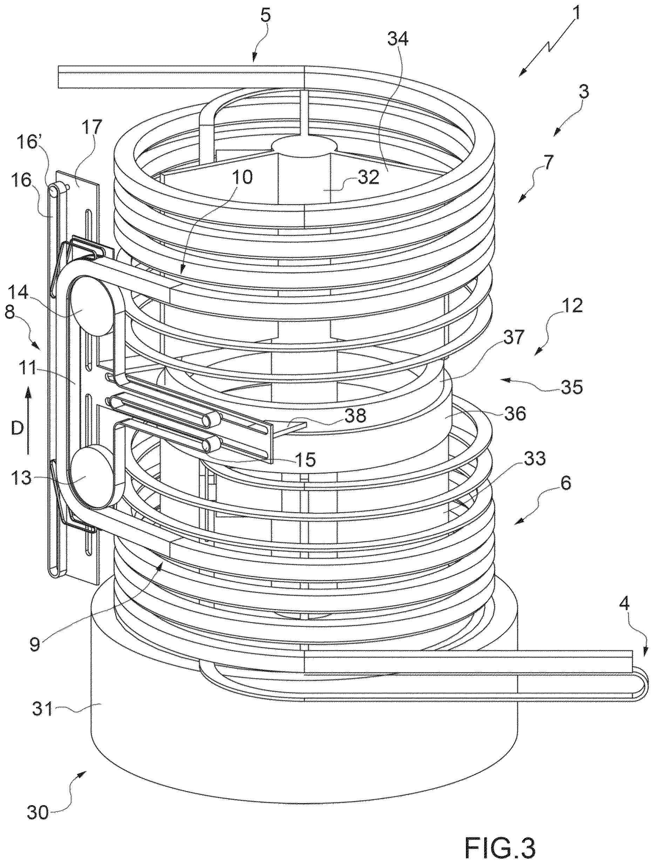

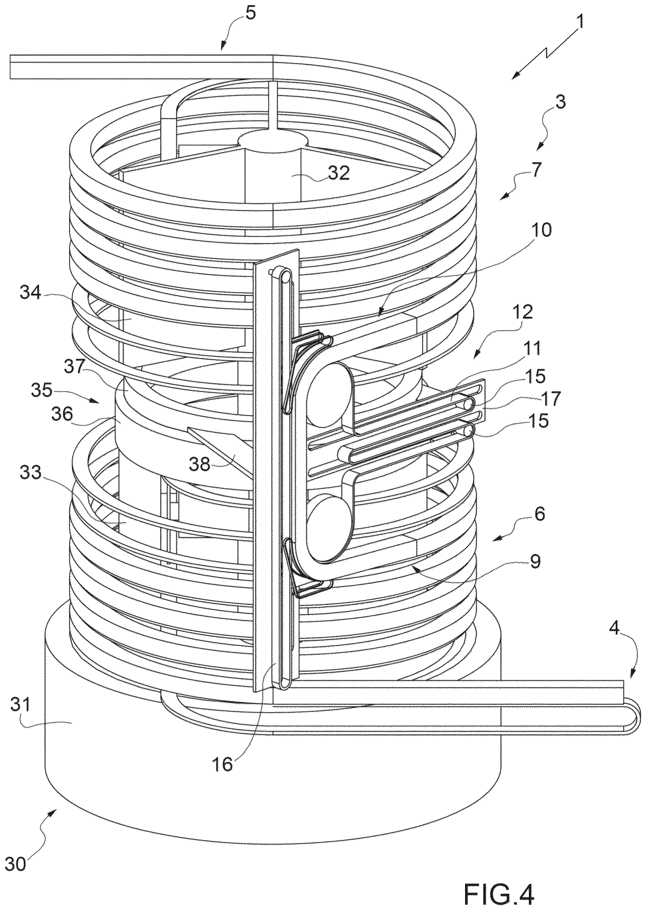

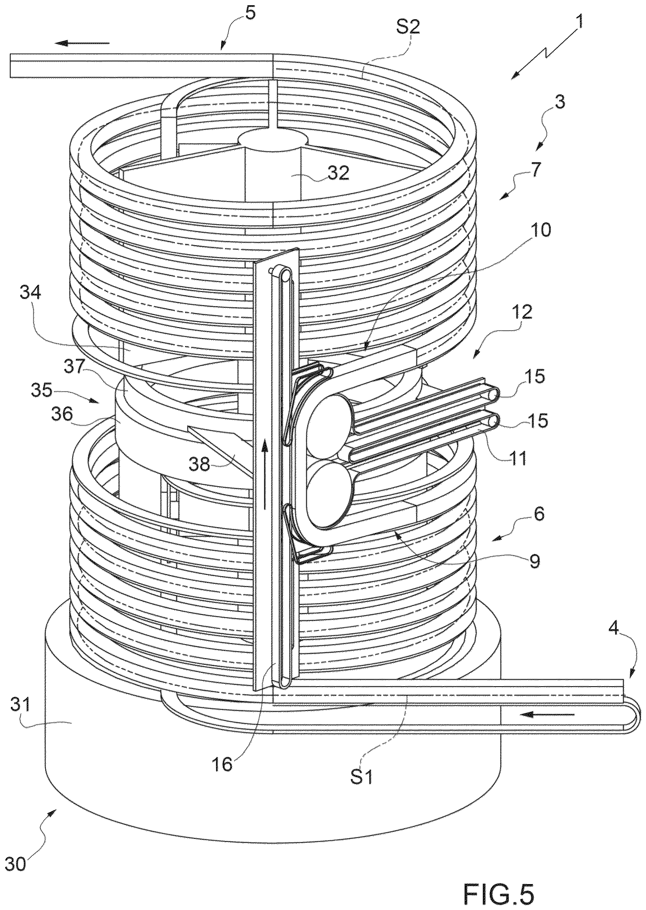

In particular, the moving assembly 12 (figures 1-5) is configured to move the transfer conveyor assembly 8 so as to move the joining device 9' and/or the joining device 10' along the conveyors 6 and 7, respectively.

In particular, said intermediate segment IS' extends upwards, more in particular is substantially vertical.

Advantageously, though not necessarily, the intermediate segment IS' is substantially linear.

According to some non-limiting embodiments, the transporting element 11 comprises (is) an oblong element closed on itself. In particular, the transporting element 11 comprises (is) a belt and/or a chain.

Thanks to the presence of the transporting element 11, the risks of clogging of articles 2 along the transfer segment IS (in particular, along the intermediate segment IS') and of damaging the articles 2 while, in use, they are conveyed along the transfer segment IS (in particular, along the intermediate segment IS') are reduced. Thanks to the transporting element 11, it is also possible to feed the articles 2 from the conveyor 6 arranged at the bottom to the conveyor 7 arranged at the top.

Advantageously, though not necessarily, the transporting element 11 is configured to (at least partially) move the articles 2, moving (together with the articles) along the transfer segment IS (in particular, along the intermediate segment IS').

In particular, the transfer segment IS extends between the input 9 and the output 10 (more in particular, from the input 9 to the output 10).

The input 9 and the output 10 are movable along the conveyor 6 and the conveyor 7, respectively.

In particular, each conveyor 6 and 7 has at least a respective turn (e.g. a helix and/or a loop). Advantageously, though not necessarily, each conveyor 6 and 7 has a plurality of respective turns (loops). In other words, each conveyor 6 and 7 is wound on itself so as to have a plurality of turns (loops). More in particular, the winding direction of the conveyor 6 is contrary to the winding direction of the conveyor 7. For example, if (looking from above) the winding direction of the conveyor 7 is clockwise, the winding direction (always looking from above) of the conveyor 6 is counterclockwise.

Advantageously, though not necessarily, the conveyor 6 has a plurality of first turn (loops) and the second conveyor 7 has a plurality of second turns (loops) having the same radius and the same distance as the first turns.

According to specific non-limiting embodiments, the conveyor 6 has a plurality of turns with a constant radius and distance; the conveyor 7 has a plurality of turns with a constant radius and distance. More precisely, the conveyor 6 has at least a segment with a (cylindrical) helical shape with a constant radius and distance; the conveyor 7 has at least a segment with a (cylindrical) helical shape with a constant radius and distance.

According to alternative embodiments which are not shown herein, each turn comprises two curved end portions and two linear central portions. In these cases, for example, the turns extend around two drums having parallel axes (see, for example, figure 1 of EP738478 of the Applicant).

Advantageously, though not necessarily, the transfer conveyor assembly 8 comprises a pulley 13 (or, alternatively, a suitably shaped - for example, "U"-shaped - sliding plane) and a pulley 14, around which the transporting element 11 is partially wound.

In particular, the store 1 (more precisely, the transfer conveyor assembly 8) comprises at least an operating assembly (of a known type and not shown) for rotating at least one of the pulleys 13 and 14 (in particular, the pulley 14). More in particular, it should be pointed out that the transfer conveyor assembly 8 is structured in such a way that the output 10 is arranged approximately in the area (more precisely, at the height) of the pulley 14 and the input 9 is arranged in the area (more precisely, at the height) of the pulley 13 (or of the sliding plane alternative to the pulley 13).

According to some non-limiting embodiments, the aforementioned operating assembly comprises (is) a motor and/or a kinematic mechanism connected to other parts of the store 1.

Advantageously, though not necessarily, the store 1 (in particular, the transfer conveyor assembly 8; more in particular, the moving assembly 12) comprises an actuator assembly (of a known type and not shown) for moving the joining devices 9' and 10' (and the pulleys 13 and 14) closer to and away from one another, in particular in a direction of longitudinal extension of the intermediate segment IS' (more in particular, in a substantially vertical direction).

According to some non-limiting embodiments, the aforementioned actuator assembly comprises (is) a motor (e.g. an electric motor) and/or a kinematic mechanism connected to other parts of the store 1.

In particular, the aforementioned actuator assembly is configured to change the distance between the joining devices 9' and 10' (and between the pulleys 13 and 14) as a function of (proportionally to) the difference between the speeds at which the conveyor 6 and the conveyor 7 convey the articles 2. More in particular, the actuator assembly is configured to change the distance between the joining devices 9' and 10' (and between the pulleys 13 and 14) with a speed that is proportional to the difference between the speeds at which the conveyor 6 and the conveyor 7 convey the articles 2.

According to some non-limiting embodiments, the transporting element 11 comprises an active segment AT with a variable length, which extends along (the intermediate segment IS' of) the transfer segment IS between the input 9 and the output 10 (in particular, between the joining devices 9' and 10'; in particular, between the pulleys 13 and 14), and a passive segment PT arranged on the opposite side of the pulleys 13 and 14 relative to the active segment AT (in other words, so that the pulleys 13 and 14 are arranged between the active segment AT and the passive segment PT). The passive segment PT extends between the pulleys 13 and 14 and partially around at least a further pulley 15 of the transfer conveyor assembly 8, which also includes a further actuator assembly (also known and not shown) for moving the pulley 15 (away from and towards the transfer segment IS).

Advantageously, the relative movement between the pulleys 13 and 14 and the movement of the pulley 15 are connected to one another so that one compensates for the other (and the transporting element 11 always remains correctly stretched). In other words, when the active segment AT gets shorter by a given length, the passive segment PT gets longer by the given length and vice versa (compensating for one another).

In some non-limiting cases, the further actuator assembly comprises a kinematic mechanism, which transfers, according to a defined proportional ratio (for example 1 to 1), the relative movement (more precisely, the displacement) of the pulleys 13 and 14 to the pulley 15.

Alternatively, the further actuator assembly comprises (is) a motor (e.g. an electric motor). In these cases, the operation of the actuator assembly (for moving the joining devices 9' and 10' - and the pulleys 13 and 14) and of the further actuator assembly (for moving the pulley 15) is coordinated by a control unit.

In particular, the transfer conveyor assembly 8 comprises at least the pulley 15 and at least two fixed pulleys (known and not shown - typically, arranged one above the other). More precisely, though not necessarily, the pulley 15 is arranged (at an intermediate height) between the two fixed pulleys and is (horizontally) movable towards and away from the fixed pulleys. The relative movement between the pulley 15 on the one hand and the fixed pulleys on the other hand compensates for the relative movement between the pulleys 13 and 14 (by lengthening the passive segment PT when the active segment AT is shortened and vice versa).

According to some specific and non-limiting embodiments (like the one shown herein), the transfer conveyor assembly 8 comprises at least two pulleys 15 and at least three fixed pulleys (known and not shown). In these cases, the relative movement between the pulleys 15 on the one hand and the fixed pulleys on the other hand compensates for the relative movement between the pulleys 13 and 14 (by lengthening the passive segment PT when the active segment AT shortens and vice versa).

Advantageously, though not necessarily, the transfer conveyor assembly 8 comprises at least a transporting element 16, which faces the transporting element 11 and is configured to move along the intermediate segment IS '(in particular, in coordination with the transporting element 11; more precisely, at the same speed as the transporting element 11). In particular, the transporting element 11 and the transporting element 16 are designed to clamp the articles 2 between them and to at least partially accompany them (move them) along the transfer segment IS (in particular, along the intermediate segment IS').

More precisely, though not necessarily, the transporting element 16 comprises (is) a belt and/or a chain.

Advantageously, though not necessarily, the transfer conveyor assembly 8 comprises a motor (electric motor - of a known type and not shown) to operate (rotate) one of the pulleys 16' and a different motor (electric motor - of a known type and not shown) to operate (rotate) one of the pulleys 14 and 13 (in particular, the pulley 14). In particular, the store 1 (more precisely, the transfer conveyor assembly 8) comprises a control unit configured to operate the two electric motors in a coordinated manner so that the speeds of the transporting element 11 and of the advancing device 16 are identical to one another (even when the pulleys 13 and 14 move away from or towards one another). For example, in use, when the pulleys 13 and 14 move away and the rotation speed of the pulleys 16' is kept constant (so as not to vary the speed of movement of the articles 1 along the transfer segment IS), the rotation speed of the pulley 14 is decreased.

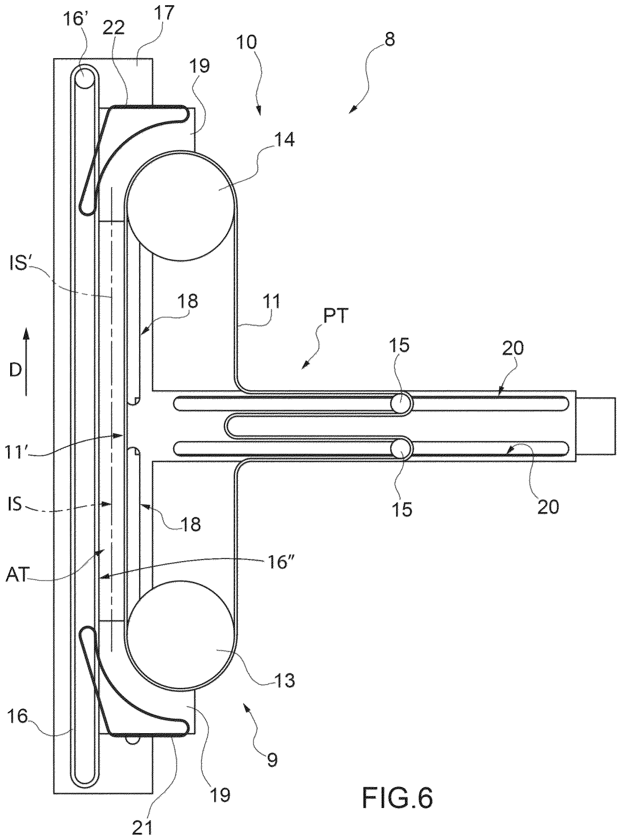

According to some alternative and non-limiting embodiments (one of them being shown in figures 1-6 and the other one being shown in figure 13), the transporting element 16 is wound around a pair of pulleys 16'. In particular, one of the pulleys 16' is connected, by means of a kinematic mechanism (known and not shown), to at least one of the pulleys 14 and 13, said kinematic mechanism (connected to a motor) being configured to transfer the rotary motion from the pulleys 13 and 14 to the pulley 16' so that the speeds of the transporting element 11 and of the advancing device 16 are identical to one other.

Advantageously, though not necessarily, the transporting element 6 is configured to (at least partially) move the articles 2, moving (together with the articles) along the transfer segment IS (in particular, along the intermediate segment IS').

Thanks to the transporting element 16, the risks of clogging of articles 2 along the transfer segment IS and of damaging the articles 2 while, in use, they are conveyed along the transfer segment IS are further reduced. Thanks to the transporting element 16, it is also possible to improve the feeding of the articles 2 from the conveyor 6 arranged at the bottom to the conveyor 7 arranged at the top.

According to some non-limiting embodiments, the transfer conveyor assembly 8 comprises a plate 17, on which the aforementioned pulleys (in particular, the pulleys 13 and 14 and, if necessary, the pulley 15, the pulleys 16' and the fixed pulleys) are mounted. In particular, the plate 17 has slits 18, which act as a guide for the pulleys 13 and 14. In other words, in use, the pulleys 13 and 14 each slide along a respective slit 18.

Alternatively or in addition, the transfer conveyor assembly 8 comprises two flat supports 19, on which the pulleys 13 and 14, respectively, are mounted (in a rotary manner). More precisely, the aforementioned actuator assembly (not shown) is configured to move the flat supports 19.

In some cases, the flat supports 19 can slide along the slits 18 or are movable along linear guides. The movement of the flat supports 19 can be obtained, for example, by means of linear actuators and/or kinematic mechanisms connected to other parts of the store 1.

In addition or alternatively, the plate 17 has slits 20, which act as a guide for the pulley/s 15. In other words, in use, the pulley/s 15 slide/s along a respective slit 20.

Alternatively or in addition, the pulleys 15 are mounted on a slider that is movable along linear guides. The movement of this slider can be obtained, for example, by means of linear actuators and/or kinematic mechanisms connected to other parts of the store 1.

Advantageously, though not necessarily, the joining device 9' and the joining device 10' move in the direction of the longitudinal extension of the intermediate segment IS' in an integral manner to a respective pulley 13 and 14.

According to some non-limiting embodiments, the transfer conveyor assembly 8 further comprises a deflector belt 21 arranged in the area of the pulley 13 for directing (modifying their advancing direction) the articles 2, coming from the input 9, in the intermediate segment IS'. In addition or alternatively, the transfer conveyor assembly 8 further comprises a deflector belt 22 arranged in the area of the pulley 14 for directing (modifying their advancing direction) the articles 2, coming from the intermediate segment IS', towards the output 10.

In particular, the deflector belts 21 and 22 are movable relative to one another, in a integral manner to the pulleys 13 and 14, respectively. According to some non-limiting embodiments, the deflector belts 21 and 22 are each mounted on a respective flat support 19.

Advantageously, though not necessarily, the conveyors 6 and 7 are arranged in such a way that one is (at least partially) above the other. In particular, the conveyor 7 is (at least partially) arranged above the conveyor 6 (and the output station 5 is arranged higher than the input station 4). By so doing, it is possible to have the output 10 in a relatively high position relative to the input 9.

In some non-limiting cases, the output station 5 is arranged higher (than the input 9) and than the input station 4. In particular, the output station 5 is arranged higher than the output 10, which, in turn, is arranged higher than the input 9, which is arranged higher than the input station 4.

More precisely (the conveyors 6 and 7 are arranged so that), the segments S1 and S2 are substantially coaxial to one another.

According to some non-limiting embodiments, the aforementioned intermediate segment IS' is (linear and) substantially parallel to an axis A around which the segment S1 and the segment S2 are wound.

In accordance with specific non-limiting embodiments, the transfer segment IS also has two connection portions SC1 and SC2 (which are partially transverse - in particular, perpendicular - to the intermediate segment IS'), which extend between the intermediate segment IS' and the segments S1 and S2, respectively. The transfer conveyor assembly 8 is configured to also convey the articles 2 along the connection portions SC1 and SC2.

More precisely, though not necessarily, the connecting portions SC1 and SC2 extend substantially horizontally.

According to some non-limiting embodiments, the transfer conveyor assembly 8 comprises conveyors with (substantially horizontal) movable transporting elements in the area of the connection portions SC1 and SC2.

According to some non-limiting embodiments, the transfer segment IS has two curved joining portions, which connect the intermediate segment IS' to the portions SC1 and SC2.

Advantageously, though not necessarily, the moving assembly 12 is configured to rotate the transfer conveyor assembly 8 around the axis A.

In use, while the moving assembly 12 rotates the transfer conveyor assembly 8 around the axis A, the input 9 (more precisely, the joining device 9') moves (slides) along the conveyor 6 and the output 10 (more precisely, the joining device 10') moves (slides) along the conveyor 7. In order to have the input 9 follow the conveyor 6 and the output 10 follow the conveyor 7, the distance between the pulleys 13 and 14 is caused to change.

Figures 1 to 5 show the store 1 in successive operating phases while the store 1 is filled. These figures show the information disclosed above, namely that the rotation movement is also associated with a variation in the length of the transfer segment IS, in particular of the intermediate segment IS '(in other words, a variation in the distance between the joining devices 9' and 10' - and between the pulleys 13 and 14).

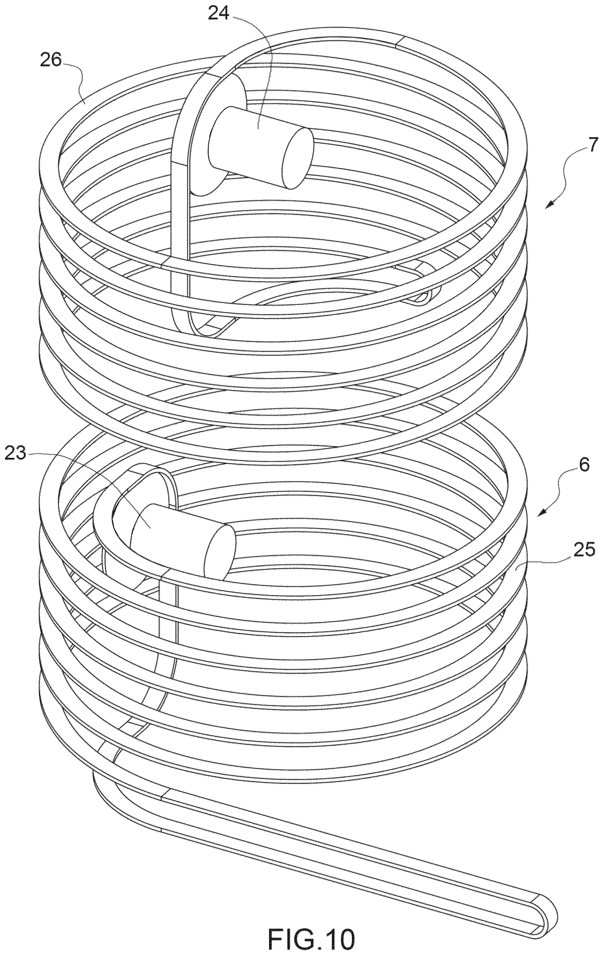

As better shown in figure 10, the conveyor 6 comprises at least a motorised pulley 23 and the conveyor 7 comprises at least a motorised pulley 24. The pulleys 23 and 24 are designed to allow a transporting element 25 and a transporting element 26, respectively, to move along the segment S1 and S2, respectively, (and along relative return segments). The segments S1 and the respective return segment define, together, a path closed on itself (typical of an endless conveyor). The segments S2 and the respective return segment define, together, a path closed on itself (typical of an endless conveyor).

The transporting element 25 is, according to some non-limiting embodiments, a belt and/or a chain. Advantageously, though not necessarily, the transporting element 25 is a chain. More precisely, the transporting element 25 is a chain as disclosed, for example, in US6364094 and/or WO2013141807.

The transporting element 26 is, according to some non-limiting embodiments, a belt and/or a chain. Advantageously, though not necessarily, the transporting element 26 is a chain. More precisely, the transporting element 26 is a chain as disclosed, for example, in US6364094 and/or WO2013141807.

The transporting elements 25 and 26 allow the articles 2 to be handled delicately.

Advantageously, though not necessarily, the conveyor 6 comprises (figure 7) a guide (a track) 27.

In particular, the transporting element 25 is configured to slide on the guide 27.

According to some non-limiting embodiments, the guide 27 is provided with an indent 28, inside which a (lower) protuberance of the transporting element 25 extends. Thanks to this structure, the element 25 follows the guide 27 and moves along the segment S1. To this regard, it should be pointed out that the guide 27 extends along the path S1; more precisely, the guide 27 has the shape of the path S1 (and defines the path S1).

In addition or alternatively, the conveyor 7 comprises a guide (track) 29.

In particular, the transporting element 26 is configured to slide on the guide 29.

According to some non-limiting embodiments, the guide 29 has a structure and function similar to the guide 27. The guide 29 extends along the path S2; more precisely, the guide 29 has the shape of the path S2 (and defines the path S1).

Advantageously, though not necessarily, the first centring elements 9" (in particular, figures 11 and 12) are arranged on opposite sides of the guide 27 and substantially in contact with the guide 27.

In addition or alternatively, the centring elements 10" are arranged on opposite sides of the guide (29) and substantially in contact with the guide 29.

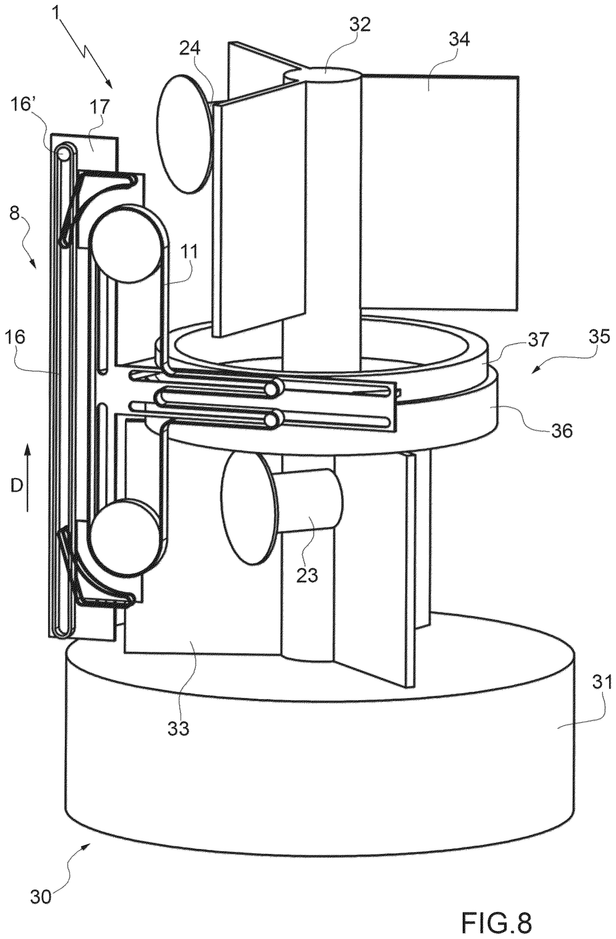

With particular reference to figure 8, according to some non-limiting embodiments, the store 1 also comprises a main support structure 30 carrying the conveyors 6 and 7 (more precisely, the guides 27 and 29) and the transfer conveyor assembly 8.

According to some non-limiting embodiments, the main support structure 30 comprises a base 31 and a support column 32 (perpendicularly) projecting from the base 31. In particular, the column 32 extends parallel to the axis A; more in particular, the column 32 extends along the axis A (in other words, the axis A - also - is the longitudinal axis of the column 32). More precisely, the column 31 has a vertical orientation.

According to some non-limiting embodiments, the main support structure 30 also comprises a support assembly 33 fixed on the column 32 and carrying the conveyor 6 (more precisely, the guide 27) and a support assembly 34 fixed on the column 32, spaced apart from the support assembly 33 and carrying the conveyor 7 (more precisely, the guide 29).

Furthermore, in some cases (like the one shown herein), the main support structure 30 also comprises a bearing 35, which, in particular, is interposed between the support assembly 33 and the support assembly 34 and is carried by the support assembly 33. The bearing 35 is part of the moving assembly 12. More precisely, the bearing 35 comprises a fixed portion 36 mounted on the support assembly 33 and a movable portion 37 configured to rotate around the axis A and carrying the transfer conveyor assembly 8. More in detail, the transfer conveyor assembly 8 is mounted so as to be integral to the bearing 35 (more precisely, to the movable portion 34) by means of two arms 38.

According to some non-limiting embodiments, the moving assembly 12 comprises at least a motor (of a known type and not shown) configured to move the transfer conveyor assembly 8 (more precisely, to rotate the transfer conveyor assembly 8 around the axis A). In these cases, in particular, the store 1 comprises sensors (encoders - of a known type and not shown) to detect the difference in speed between the conveyors 6 and 7 (more precisely, between the motorised pulleys 24 and 25) and a control unit to operate the moving assembly 12 as a function of this difference.

Advantageously, though not necessarily, the aforementioned actuator assembly (for moving the joining devices 9' and 10' - and the pulleys 13 and 14 towards and away from one another) comprises a kinematic mechanism (for example, a gear system with a worm screw) connected to the motor of the moving assembly 12 to transmit the motion (according to a particular proportion) to the joining devices 9' and 10' - and to the pulleys 13 and 14 (in order to have them move towards and away from one another).

Advantageously, though not necessarily, the transfer conveyor assembly 8 is configured to change the speed at which the length of the transfer segment IS (in particular, of the intermediate segment IS') changes as a function of the rotation speed generated by the moving assembly 12 around the rotation axis (to this regard, see, for example, WO2019073447A1).

According to some embodiments, the moving assembly 12 comprises a mechanical connection configured to move the transfer conveyor assembly 8 (more precisely, to rotate the transfer conveyor assembly 8 around the axis A) as a function of the speed differences between the conveyors 6 and 7 (more precisely, between the motorised pulleys 24 and 25).

Typically, in use, the store 1 is placed between a first machine (for example, a cigarette maker machine) and a second machine (for example, a packer machine) so as to compensate for the different speeds at which the first machine feeds the articles 2 to the store 1 and the second machine uses the articles 2 coming from the store. More precisely, the store 1 comprises a control system connected to the first and to the second machine (for receiving information on the speeds) and configured to adjust the speed of the conveyor 6 so as to adapt it to the speed of the first machine (and to adjust the speed of the conveyor 7 so as to adapt it to the speed of the second machine).

With particular reference to figures 11 and 12 and according to some non-limiting embodiments, the joining device 9' comprises a central element 42, on which, in use, the articles 2 shift from the first conveyor 6 to the transfer conveyor assembly 8. The centring elements 9" are arranged on opposite sides of the central element 42 (and are substantially integral to the central element 42).

In addition or alternatively, the joining device 10' comprises a central element 43, on which, in use, the articles 2 shift from the transfer conveyor assembly 8 to the second conveyor 7. The centring elements 10" are arranged on opposite sides of the central element 43 (and are substantially integral to the second central element 42).

In this way, tests have shown that the relative position of the transfer conveyor assembly 8 (in particular, of the joining devices 9' and 10') with respect to the conveyors 6 and 7 is more stable and precise.

Advantageously, though not necessarily, the joining device 9' comprises at least an adjustment device for adjusting the position of the centring elements 9" relative to the conveyor 6 (in particular, relative to the guide 27). In particular, in this way it is possible to adjust the position of the centring elements 9" so that they are in contact with the guide 27.

In addition or alternatively, the joining device 10' comprises at least an adjustment device for adjusting the position of the centring elements 10" relative to the conveyor 7 (in particular, relative to the guide 29). In particular, in this way it is possible to adjust the position of the centring elements 10" so that they are in contact with the guide 29.

According to non-limiting embodiments, an adjustment device is provided for each centring element 9" and 10".

In some non-limiting cases, each adjustment device comprises (is) an eccentric (which can be operated, for example, by means of a screwdriver or the like).

Advantageously, though not necessarily, the central element 42 has at least a distal portion 44 relative to the transfer conveyor assembly 8 (namely, arranged at a distal end with respect to the transfer conveyor assembly 8), which is tapered towards the conveyor 6.

Optionally, in addition or alternatively, the central element 43 has at least a distal portion 45 relative to the transfer conveyor assembly 8 (namely, arranged at a distal end with respect to the transfer conveyor assembly 8), which is tapered towards the second conveyor 7.

This makes it easier for the articles 2 to be transferred from and to the transfer conveyor assembly 8, thus reducing at the same time the risk of clogging.

According to some non-limiting embodiments, the central elements 42 act as chutes.

Advantageously, though not necessarily, the transporting element 25 (in particular, a belt and/or a chain) is configured to slide along at least the segment S1 and has at least a depression 46 (in particular, at least two depressions 46), which longitudinally extends along the transporting element 25.

In addition or alternatively, the transporting element 26 is configured to slide along at least the segment S2 and has at least a depression 47 (in particular, at least two depressions 47), which longitudinally extends along the transporting element 26.

In particular, the first central element 42 has at least a tine 48 (more in particular, at least two tines), which projects on the opposite side relative to the transfer conveyor assembly 8 (in particular, from the distal portion 44) and, in particular, at least partially extends inside the depression 46.

In addition or alternatively, the central element 43 has at least two tines 49, which project on the opposite side relative to the transfer conveyor assembly 8 (in particular, from the distal portion 45) and, in particular, (each) at least partially extend inside a (respective) depression 46.

It has been experimentally observed that in this way it is easier for the articles 2 to be transferred from and to the transfer conveyor assembly 8 and the risk of clogging is reduced.

Advantageously, though not necessarily, each tine 48 and 49 is tapered towards its free end (in particular, away from the transfer conveyor assembly 8).

Advantageously, though not necessarily, the joining device 9' comprises at least a lower roller 50 (in particular, a bearing), which is arranged in contact with the conveyor 6 (in particular, in contact with the transporting element 25; in particular, is arranged between the central element 42 and the conveyor 6) and is configured to help the first joining device 9' slide on the first conveyor 6. In particular, the lower roller 50 has a rotation axis transverse to the segment S1.

Tests have shown that, in this way, the sliding of the joining devices 9' and 10' is better and the risk of clogging is reduced.

Advantageously, though not necessarily, the joining device 10' comprises at least a lower roller 51 (in particular, a bearing), which is arranged in contact with the conveyor 7 (in particular, in contact with the transporting element 26; in particular, is arranged between the central element 43 and the conveyor 7) and is configured to help the second joining device 10' slide on the second conveyor 7. In particular, the lower roller 51 has a rotation axis transverse to the segment S2.

According to some non-limiting embodiments, the joining device 9' comprises at least two lower rollers 50 that are offset relative to one another (and/or staggered, in particular as regards the position along the segment S1) . In addition or alternatively, the joining device 10' comprises at least two lower rollers 51 that are offset relative to one another (and/or staggered, in particular as regards the position along the segment S2) .

Tests have shown that, in this way, the sliding of the joining devices 9' and 10' surprisingly is smoother (with smaller jolts) and the risk of clogging is reduced. This behaviour was particularly evident when the transporting elements 25 and 26 had an irregular surface (for example, they were chains).

It is supposed that this result is due to the fact that, with this structure, the lower rollers 50 (and/or 51) are not simultaneously located in recesses (discontinuities) of the transporting element 25 (and/or 26).

Advantageously, though not necessarily, the joining device 9' comprises at least an adjustment device for adjusting the position of the lower roller/s 50 relative to the conveyor 6 (in particular, relative to the transporting element 25). In addition or alternatively, the joining device 10' comprises at least an adjustment device for adjusting the position of the lower roller/s 51 relative to the conveyor 7 (in particular, relative to the transporting element 26).

In particular, in this way, it is possible to adjust the position of the lower roller/s 50 so that it/they is/are correctly in contact with the transporting element 25 and/or the position of the lower roller/s 51 so that it/they is/are correctly in contact with the transporting element 26.

According to non-limiting embodiments, an adjustment device is provided for each lower roller 50 and 51.

In some non-limiting cases, each adjustment device comprises (is) an eccentric (which can be operated, for example, by means of a screwdriver or the like).

Advantageously, though not necessarily, the conveyor assembly 3 comprises a hinge 52, which is arranged between the joining device 9' and the transfer conveyor assembly 8 and is configured to allow the joining device 9' to pivot relative to the transfer conveyor assembly 8 around a respective pivoting axis (in particular, transverse to the segment S1).

In addition or alternatively, the conveyor assembly 3 comprises a hinge 53, which is arranged between the joining device 10' and the transfer conveyor assembly 8 and is configured to allow the joining device 10' to pivot relative to the transfer conveyor assembly 8 around a respective pivoting axis (in particular, transverse to the segment S1).

Also in this case a more fluid movement of the articles 2 and a reduction in the risk of clogging were surprisingly observed.

The store 1 according to the invention offers several advantages relative to the state of the art. Among others, it should be pointed out that, in this way, it is possible to have a relatively uncomplicated structure that permits relatively simple maintenance operations. Furthermore, the store 1 is particularly flexible, for it is able to also have an output station at the top (a particularly convenient position for the layouts of the current machines), and is delicate in handling the items 2. The connections of the transfer conveyor assembly 8 to the conveyors 6 and 7 are stable and reliable. The risks of clogging of articles 2 and/or that these clogs are large and/or that articles 2 are damaged are also reduced.

Unless explicitly indicated otherwise, the content of the references (articles, texts, patent applications, etc.) mentioned above is entirely quoted herein for the sake of a complete disclosure. In particular, the above-mentioned references are included herein by reference.

According to a further aspect of the invention, there is also provided the store 1 disclosed above.

According to a further aspect of the invention, there is provided a method of conveying the articles 2, in particular, substantially cylindrical articles (more in particular, articles of the tobacco processing industry), from an input station 4 to an output station 5 along a path P (in particular, with a variable length); the method comprises: a transfer step, during which a transfer conveyor assembly 8 conveys the articles 2 along at least a transfer segment IS of the path P from an input 9 to an output 10.

The transfer segment IS has at least an intermediate segment IS' (with a variable length), along which the transfer conveyor assembly 8 conveys the articles 2 in a given upward direction D.

The transfer conveyor assembly 8 comprises at least a first transporting element 11 (in particular, a belt and/or a chain), which (at least partially) accompanies the articles 2 along at least part of the intermediate segment IS' in the given upward direction D and has a front face 11', which comes into contact with at least part of the articles 2; and a second transporting element 16, which (at least partially) accompanies the articles 2 along at least part of the intermediate segment IS' in the given upward direction D and has a front face 16", which faces the first front face and comes into contact with at least part of the articles 2.

The front face 11' and the front face 16" have a distance of less than about 70 mm. In other words, the front face 11' and the front face 16" are less than about 70 mm (in particular, less than about 65 mm; more in particular, less than about 60 mm) apart.

According to some non-limiting embodiments, the front face 11' and the front face 16" have a distance of more than about 40 mm, in particular more than about 45 mm. In other words, the front face 11' and the front face 16" are at least about 40 mm, in particular at least about 45 mm apart.

Advantageously, though not necessarily, the front face 11' has a plurality of protuberances PR and/or a plurality of indents IN; each protuberance PR has a height of at least about 1.5 mm (in particular, at least about 2 mm); each indent IN has a depth of at least about 1.5 mm (in particular, at least about 2 mm). In addition or alternatively, the front face 16" also has a plurality of protuberances PR and/or a plurality of indents IN.

According to some non-limiting embodiments, each protuberance PR has a width of at least about 2 mm. In addition or alternatively, each indent IN has a width of at least about 2 mm. In particular, each protuberance PR has a width up to about 1.5 cm and each indent IN has a width up to about 1.5 cm.

According to some non-limiting embodiments, each protuberance PR has a height up to about 2.5 cm; each indent IN has a depth up to about 2.5 cm.

Advantageously, though not necessarily, the conveyor assembly 3 comprises a moving assembly 12, which moves said input 9 and/or said output 10 so as to change a length of the intermediate segment IS'.

In particular, the articles 2 have an oblong shape. More in particular, the transfer conveyor assembly 8 conveys the articles 2 in a mass (namely, in contact with one another and in several layers - see for example the enlargement of the upper part of figure 1 and figure 15) and crosswise (namely, in a transverse direction, in particular perpendicular to their longitudinal extension).

According to some non-limiting embodiments, the method also comprises: a first conveying step, during which at least a transporting element 25 of a conveyor 6 conveys the articles 2 from the input station 4 along a first segment S1 of the path P;
a second conveying step, during which a conveyor 7 conveys the articles 2 to the output station 5 along a second segment S2 of the path P arranged downstream of the first segment S 1. During the transfer step, the transfer conveyor assembly 8 conveys the articles 2 from the conveyor 6 to the conveyor 7 along the transfer segment IS of the path P and has the input 9 arranged in the area of the first segment S1 and the output 10 arranged in the area of the second segment S2 so as to feed the articles 2 to the second conveyor 7.

According to some embodiments, during the moving step, the moving assembly 12 moves the transfer conveyor assembly 8 so as to move the input 9 and the output 10 along the conveyors 6 and 7, respectively.

In particular, the conveyor assembly 3 comprises a joining device 9', which allows the articles 2 to move from the first conveyor 6 to the transfer conveyor assembly 8 and is movable on the first conveyor 6; and a joining device 10', which allows the articles 2 to move from the transfer conveyor assembly 8 to the second conveyor 7 and is movable on the conveyor 7.

The conveyor assembly 3 conveys the articles 2 from the input station 4 to the output station 5 along the path P with a variable length. The end E moves in a substantially integral manner to the joining device 9'. In particular, the further end E' moves in a substantially integral manner to the second joining device 10'.

Advantageously, though not necessarily, the method is implemented by the conveyor assembly 3 as described above.

### LIST OF THE REFERENCE NUMBERS OF THE FIGURES

1 store
2 articles
3 conveyor assembly
4 input station
5 output station
6 conveyor
7 conveyor
8 transfer conveyor assembly
9 input
10 output
11 transporting element
12 moving assembly
13 pulley
14 pulley
15 pulley
16 transporting element
17 plate
18 slits
19 flat supports
20 slits
21 deflector belt
22 deflector belt
23 motorised pulley
24 motorised pulley
25 transporting element
26 transporting element
27 guide
28 indent
29 guide
30 support structure
31 base
32 column
33 support assembly
34 support assembly
35 bearing
36 fixed portion
37 movable portion
38 arms
42 central element
43 central element
44 distal portion
45 distal portion
46 depression
47 depression
48 tine
49 tine
50 lower roller
51 lower roller
52 hinge
53 hinge
9' joining device
10' joining device
16' pulleys
11 front face
9" centring elements
10" centring elements
16" front face
A axis
P path
S1 segment
S2 segment
IS transfer segment
SC1 connection portion
SC2 connection portion
AT active segment
PT passive segment
D given direction
PR protuberances
IN indents
BS base surface
IS' intermediate segment

## Claims

1. A conveyor assembly for conveying substantially cylindrical articles (2), in particular of the tobacco processing industry; the conveyor assembly (3) is configured to convey the articles (2) from an input station (4) to an output station (5) along a path (P);
the conveyor assembly (3) comprises at least a transfer conveyor assembly (8), which is configured to convey the articles (2) along at least a transfer segment (IS) of the path (P) from an input (9) to an output (10);
the transfer segment (IS) has at least an intermediate segment (IS') at least partially extending upwards;
the transfer conveyor assembly (8) is configured to convey the articles (2) along the intermediate segment (IS') in a given upward direction (D);
the transfer conveyor assembly (8) comprises at least a first transporting element (11) (in particular, a belt and/or a chain), which is configured to accompany the articles (2) along at least part of the intermediate segment (IS') in the given upward direction (D) and has a first front face (11') configured to come into contact with at least part of the articles (2); and a second transporting element (16), which is configured to accompany the articles (2) along at least part of the intermediate segment (IS') in the given upward direction (D) and has a second front face (16") facing the first front face (11') and configured to come into contact with at least part of the articles (2);
the first front face (11') and the second front face (16") having a distance of less than about 70 mm.

2. The conveyor assembly according to claim 1, wherein the first front face (11') and the second front face (16") have a distance of less than about 65 mm.

3. The conveyor assembly according to claim 1, wherein the first front face (11') and the second front face (16") have a distance of less than about 60 mm.

4. The conveyor assembly according to any one of the preceding claims, wherein the first front face (11') and the second front face (16") have a distance of more than about 40 mm, in particular more than about 45 mm.

5. The conveyor assembly according to any one of the preceding claims, wherein at least the first front face (11') has a plurality of protuberances (PR) and/or a plurality of indents (IN); each protuberance (PR) has a height of at least about 1.5 mm (in particular, at least about 2 mm); each indent (IN) has a depth of at least about 1.5 mm (in particular, at least about 2 mm); in particular, also the second front face (16") has a plurality of protuberances (PR) and/or a plurality of indents (IN).

6. The conveyor assembly according to claim 4, wherein each protuberance (PR) has a width of at least about 2 mm; each indent (IN) has a width of at least about 2 mm; in particular, each protuberance (PR) has a width up to about 1.5 cm; in particular, each indent (IN) has a depth up to about 1.5 cm.

7. The conveyor assembly according to claim 5 or 6, wherein each protuberance (PR) has a height up to about 2.5 cm; each indent (IN) has a depth up to about 2.5 cm.

8. The conveyor assembly according to any one of the preceding claims and comprising a moving assembly (12), which is configured to move said input (9) and/or said output (10) so as to change a length of the intermediate segment (IS').

9. The conveyor assembly according to any one of the preceding claims, wherein the conveyor assembly (3) comprises a first conveyor (6), which is configured to feed the articles (2) from the input station (4) along a first segment (S1) of the path (P); at least a second conveyor (7), which is configured to feed the articles (2) to the output station (5) along a second segment (S2) of the path (P);
the transfer conveyor assembly (8) is configured to convey the articles (2) from the first conveyor (6) to the second conveyor (7) along said transfer segment (IS) of the path (P) and has said input (9), which is arranged in the area of the first segment (S1) so as to receive the articles (2) from the first conveyor (6), and said output (10), which is arranged in the area of the second segment (S2) so as to feed the articles (2) to the second conveyor (7); the first segment (S1) extends from the input station (4) to the input (9); the second segment (S2) extends from the output (10) to the output station (5);
said moving assembly (12) is configured to move the transfer conveyor assembly (8) so as to move said input (9) and said output (10) along the first and the second conveyor (6, 7), respectively.

10. The conveyor assembly (3) according to claim 9, wherein the first and the second conveyor (6, 7) are arranged in such a way that one is at least partially above the other one, in particular the second conveyor (7) is at least partially arranged above the first conveyor (6); the first conveyor (6) has at least a turn; the second conveyor (7) has at least a turn; the turning direction of the first conveyor (6) being contrary to the turning direction of the second conveyor (7);
in particular, the first and the second conveyor (6, 7) have turns that are substantially coaxial to one another; in particular, the first conveyor (6) has a plurality of first turns; in particular, the second conveyor (7) has a plurality of second turns having the same radius and the same distance as the first turns.

11. The conveyor assembly (3) according to claim 9 or 10, wherein the conveyor assembly (3) comprises a first joining device (9'), which is configured to allow the articles (2) to move from the first conveyor (6) to the transfer conveyor assembly (8) and is movable on the first conveyor (6); and a second joining device (10'), which is configured to allow the articles (2) to move from the transfer conveyor assembly (8) to the second conveyor (7) and is movable on the second conveyor (7);

12. A method of conveying articles (2), in particular substantially cylindrical articles of the tobacco processing industry, from an input station (4) to an output station (5) along a path (P);
the method comprises:
a transfer step, during which a transfer conveyor assembly (8) conveys the articles (2) along at least a transfer segment (IS) of the path (P) from an input (9) to an output (10);
the transfer segment (IS) has at least an intermediate segment (IS'), along which the transfer conveyor assembly (8) conveys the articles (2) in a given upward direction (D);
the transfer conveyor assembly (8) comprises at least a first transporting element (11) (in particular, a belt and/or a chain), which accompanies the articles (2) along at least part of the intermediate segment (IS') in the given upward direction (D) and has a first front face (1 1'), which comes into contact with at least part of the articles (2); and a second transporting element (16), which accompanies the articles (2) along at least part of the intermediate segment (IS') in the given upward direction (D) and has a second front face (16"), which faces the first front face and comes into contact with at least part of the articles (2);
the first front face (11') and the second front face (16") having a distance of less than about 70 mm.

13. The method according to claim 12, wherein the articles (2) have an oblong shape (in particular, are substantially cylindrical); the first transfer conveyor assembly (8) conveys the articles (2) crosswise in a mass.

14. The method according to claim 13, wherein the articles (2) have a length of less than about 70 mm (in particular, up to about 65 mm); in particular, the length of the articles (2) is of at least 40 mm (in particular, at least 45 mm).

15. The method according to claim 13 or 14, wherein the articles (2) have a width (in particular, a diameter) of less than about 15 mm (in particular, up to about 13 mm); in particular, the articles (2) have a width (in particular, a diameter) of at least about 1 mm (in particular, at least about 3 mm).

16. The method according to any one of the claims from 12 to 15 and implemented by means of a conveyor assembly (3) according to any one of the claims from 1 to 12.
